(19) Europäisches Patentamt
European Patent Office
Office européen des brevets

(11) Publication number: **0 090 551**
**A1**

# (12) EUROPEAN PATENT APPLICATION

(21) Application number: **83301473.1**

(22) Date of filing: **16.03.83**

(51) Int. Cl.³: **C 02 F 1/28,** C 02 F 1/58, C 02 F 1/62, C 08 G 73/04

(30) Priority: **29.03.82 GB 8209226**
**06.09.82 GB 8225304**

(43) Date of publication of application: **05.10.83**
**Bulletin 83/40**

(84) Designated Contracting States: **DE FR GB**

(71) Applicant: **The Secretary of State for Defence in Her Britannic Majesty's Government of The United Kingdom of Great Britain and, Northern Ireland Whitehall, London SW1A 2HB (GB)**

(72) Inventor: **Hartley, Frank Robinson, 9 Curtis Road, Shrivenham Wiltshire (GB)**
Inventor: **Barnes, John Herbert, Roberts Hall R.M.C.S., Shrivenham Wiltshire (GB)**
Inventor: **Bates, Christopher, 67 Maytree Close Badgers Farm, Winchester Hampshire S022 4JF (GB)**

(74) Representative: **McCormack, Derek James et al, Procurement Executive Ministry of Defence Pats 1B5, Room 2014 Empress State Building Lillie Road, London SW6 1TR (GB)**

## (54) Metal ion extraction process.

(57) A method of removing metal ions from a turbid liquid includes pumping the liquid at rates of between about 200 and 300 $cm^3$ per hour through a column which includes a non-cross linked, insoluble polymer capable of extracting metal ions dispersed in an inert support material. It is preferred that the turbid liquid enters the column at the base and is recovered at the top. A suitable insoluble polymer is polyethyleneimine dithio carbamate which may be prepared by adding a solution of polyethyleimineinethanol to a mixture of carbon disulphide and ethanol. The preferred polymer to inert support ratio is 1:9 and the preferred length to diameter ratio of the column is 6. The present invention allows 99.5% removal of metal ions which may be recovered from the column as useable metal by pumping a regeneration liquid through the column, thereby regenerating an exhausted column at the same time.

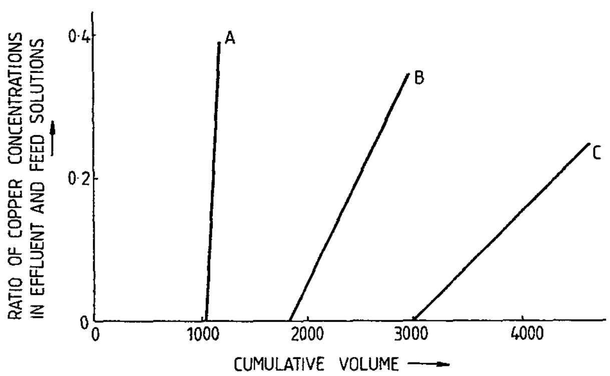


EP 0 090 551 A1

METAL ION EXTRACTION PROCESS

The present invention relates to methods of extracting metal ions from turbid liquids.

Effluents from industrial processes often contain metal ions which not only presents a source of pollution but also results in considerable wastage of materials. Effluent control standards require that only very low levels of toxic waste be discharged in waste streams. The problems of economically satisfying this requirement are considerable. There are materials which are known to scavenge metal ions, for example the dithio acid salt of polyethyleneimine which is known as a water soluble polymer, which may be added to a turbid effluent containing metal ions either as a solid or as an aqueous solution. However, the capacity of the soluble polymer to scavenge metal ions is seriously affected by the pH of the liquid containing them and it requires that the liquid be neutralised before addition of the polymer, and only low levels of metal ions can be removed from the liquid.

According to a first aspect of the present invention a method of removing metal ions from a turbid liquid includes pumping the liquid through a column which includes a non-cross linked, insoluble polymer capable of scavenging metal ions, dispersed in an inert support material.

It is preferred that the liquid to be pumped through the column, enters the column at the base and is recovered at the top. The column is self filtering.

The most suitable polymer is polyethyleneimine dithio carbamate which may be prepared as a water soluble polymer in which form it is well known. However, water soluble polyethylene imine dithio carbamate is unsuitable, and a water insoluble form of the polymer is required for the process of the present invention. Preferably the insoluble form of the polymer is prepared by adding a solution of polyethyleneimine in ethanol to a mixture of carbon disulphide and ethanol. This produces polyethyleneimine dithio carbamate in the form of a friable white powder. It is postulated that the structure of the insoluble polymer made in this way has a structure as shown in Formula 1.

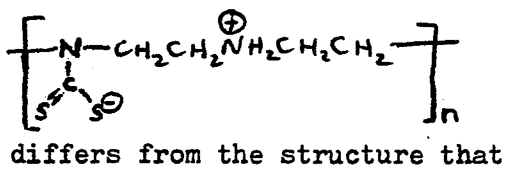

Formula I

This differs from the structure that has been suggested for the soluble form of the polymer as shown in Formula 2:

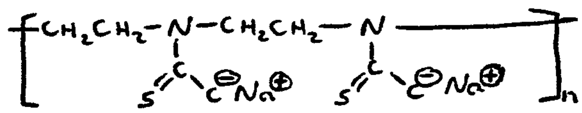

Formula 2

which may be prepared by reaction of polyethyleneimine with carbon disulphide in the presence of sodium hydroxide.

The effects of mineral acids such as hydrochloric acid, nitric acid and sulphuric acid on the insoluble polymer with regard to its capacity to absorb metal ions are minimal above pH 3.5, but at pH 0.5 the absorbtion capacity decreases by about one third for nitric and sulphuric acids, whereas the polymer is little affected by hydrochloric acid at the same pH. Thus, unlike the water soluble polymer the insoluble polymer remains an effective absorber of metal ions over a wide pH range obviating the need to neutralise liquids before they are brought into contact with the polymer.

A column which only contains the insoluble polymer is unsuitable for a metal ion extraction process involving pumping of a metal ion containing liquid through the polymer contained in the column since such a column is impermeable to liquids. Thus it is necessary to disperse the polymer in an inert support material.

Ideally such a material, must be easy to handle and relatively cheap. In addition not only must it be capable of containing the very fine polymer powder but also of containing the polymer/metal complex particles that form as metal ions are absorbed from a liquid travelling through the polymer/support dispersion. The particle size of the inert support material should be comparable to that of the polymer particles. Thus it is preferred that the inert support material has a particle size not more than a factor of 5 greater and not more than a factor of 100 less than the average size of the polymer particles. An inert support of large particle size is unsuitable since when a liquid is pumped through the polymer/support dispersion early breakthrough of metal ions occurs due to poor packing characteristics of the polymer. Suitable inert support materials include silica, fly ash and diatomaceous earths. The preferred support material is a diatomaceous earth eg Kieselguhr.

The insoluble polyethyleneimine dithio carbamate may be dispersed in the inert support material by a simple mixing and slurrying technique. It is preferred that the ratio of polymer to inert support material is not less than 1:9, since below this value there is some decrease in absorbtive capacity as a result of a deterioration in the flow properties of the packed bed of polymer and inert support. Although a polymer/support ratio greater than 1:9 may be used it is not desirable since the polymer is too widely dispersed and does not permit an optimum use of the polymer. In effect ratios of greater than 1:9 waste space.

There are no limitations to the length to diameter ratio of the column, although if it is too great the pressure drop in the liquid being pumped through the column is large which although undesirable does not impare absorbtive capacity. Typically the length to diameter ratio is 6. The metal ion that is to be extracted from the turbid liquid and the desired rate of flow of the liquid through the column may determine that the optimum ratio differs from this value.

A typical rate of flow of liquid through a column is about 200-300 $cm^3$ per hour, although the optimum rate of flow will vary according to the metal ion being extracted and the desired quality of the liquid which emerges from the column after having travelled through it. As the flow rate increases the metal ion uptake decreases. Low rates of flow result in liquids of very high quality. It is possible to achieve 99.5% removal of metal ions from a liquid with the process of the present invention. The process may be operated with this efficiency at temperatures of between about 20°C and 50°C, although there is a slight decrease in efficiency at about 50°C.

Using the process of the present invention it is possible to remove metal ions from very dilute effluents, which is particularly useful for the recovery of precious metals such as palladium.

There is a limit to the effective operating life of a column in that there is a limit to the quantity of metal ions that can be absorbed by a particular column, and is determined by the amount of polymer contained in it.

By removing the absorbed metal ions the column can be regenerated and reused. The absorbed metal ions may be removed by treating the polymer/metal complex particles with an oxidising mineral acid such as nitric acid or hydrochloric acid. The polyethyleneimine dithio carbamate is destroyed in the process and the more concentrated the acid the more vigorous the destruction process. However, absorbed metal ions may be recovered as usable metal in this way, but the technique is not suited to metal recovery when the polymer/metal complex is still contained in the column. Moreover the technique does not allow reuse of the column, so that a new column has to be constructed, once the original one has been exhausted, if the volume of turbid liquid containing the metal ions is greater than the volume which may be pumped through the column before exhaustion of the column occurs.

According to a second aspect of the present invention a method of continuously removing metal ions from a turbid liquid

stream includes alternately pumping a turbid liquid and a column regenerating liquid through a column which includes a non-cross-linked, insoluble polymer capable of scavenging metal ions, dispersed in an inert support material. By pumping a regenerating liquid through the column the absorbed metal ions may be removed from the polymer by reaction between the metal ions and the regenerating liquid forming a complex salt from which metal may be recovered. By alternately pumping the turbid liquid and the regenerating liquid through the column, the column may be regenerated immediately after having been exhausted and once regeneration has taken place, turbid liquid may be pumped through once again. The cycle may be repeated each time the column has been exhausted. Examples of suitable regenerating liquids include a solution of the disodium salt of ethylenediaminetetra acetic acid which may be used for the recovery of absorbed copper and potassium cyanide solution or sodium cyanide solution either of which may be used for the recovery of absorbed palladium. It is preferred that a solution of the disodium salt has a concentration of between about 0.1 M and 0.25 M and that a sodium or potassium cyanide solution has a concentration of about 2 M. With the disodium salt solution it is possible to recover between about 35% and 55% of absorbed copper depending on the volume and flow rate of the regeneration solution. With cyanide solutions it is possible to recover over 90% of absorbed palladium as the soluble $K_2[Pd(CN)_4]$ salt. This can be increased to 98% recovery by adjusting the volume and flow of the regeneration solution to suit the level of absorbed metal ions in the column. A concentrated cyanide solution may be used several times so that a concentration of palladium may be achieved. Palladium metal may be recovered from a $K_2[Pd(CN)]_4$ salt solution by electrolysis. Prior to pumping a regeneration solution through an exhausted column it may be necessary to flush the column with water until the pH of the emergent flushing water is between about 5.0 and 7.0, since aqueous sodium cyanide solutions of pH 2-3 liberate hydrogen cyanide.

Polyethyleneimine-dithiocarbamate dispersed in Kieselguhr is a highly effective column packing for the removal of heavy metals from aqueous solutions, including iron (II), cobalt (II) rhodium (III), nickel (II), palladium (II), platinum (II), copper (II), silver (I), zinc (II), cadmium (II) and mercury (II). Columns may be regenerated after exhaustion using cyanide solution where the absorbed metal ions are rhodium (III), nickel (II), palladium (II), platinum (II), silver (I), cadmium (II) or mercury (II). Where the absorbed metal ions are iron (II), copper (II), cobalt (II) or zinc (II) a solution of disodium ethylenediamine tetraacetic acid may be used to regenerate the column.

Embodiments of the present invention will now be described by way of Example with reference to the drawings in which:

Figure 1 is a plot of the ratio of copper concentrations in effluent and feed solutions against cumulative volume ($cm^3$);

Figure 2 is a plot of palladium uptake (g Pd/g polymer) against flow rate ($cm^3$ $h^{-1}$);

Figure 3 is a plot of palladium uptake (g P/d/g polymer) against number of cycles of absorption and regeneration.

EXAMPLE 1

Polyethyleneimine dithio carbamate was prepared as follows. A solution of polyethyleneimine in ethanol was prepared from Polymin P (trade name) which was available as a 50% aqueous solution, 31 $cm^3$ of the latter solution being mixed with 100 $cm^3$ of ethanol. The ethanol solution was added dropwise to a mixture of 63 g of carbon disulphide in 100 $cm^3$ of ethanol, the reaction mixture being stirred constantly. The rate of stirring was adjusted throughout the course of the reaction so that as the polyethyleneimine dithio carbamate was precipitated, the precipitate suspension was kept mobile, thereby reducing the problems associated with driving off carbon disulphide under vigorous agitation. The reaction was carried out at room temperature for about 30 minutes. A white precipitate was

obtained and was filtered off, washed in ethanol and ether and dried under vacuum at 40°C in a rotary evaporator for about 16 hours. A yield of 28 g of a white friable powder was obtained, which upon storing for several days became cream coloured and had a slightly sulphorous odour. The particle size of the powder was extremely small and there was a tendency to form aggregates. The above process was scaled up to produce 100 g batches of the ploymer.

Experiments using columns filled with the polymer alone, in which attempts to pump turbid liquids through the polymer were unsuccessful, the polymer bed being impermeable to the flow of liquid. Packing a column with a slurry of the polymer failed to alleviate the problem.

EXAMPLE 2

A column was prepared as follows. Polyethyleneimine dithio carbamate was ground to a powder of uniform particle size. Weighed amounts of the polymer powder and of a diatomaceous earth (Kieselguhr) with a particle size of about 75μm were placed in an enclosed vessel. Water was added and the mixture stirred to disperse the polymer. The polymer/Kieselguhr slurry was poured into a column to which a base cap had been previously positioned and secured. A glass sinter of porosity 1 had been sealed into the end cap before the latter had been positioned in the base of the column. As the polymer/kieselguhr slurry was added to the column suction was applied at the base. Water drained from the column was used to rinse the last traces of the slurry from the mixing vessel. A top end cap with a glass sinter of porosity 1 was positioned and secured.

Initially columns with a polymer/support ratio of 1:1 were used. A feed solution consisting of 0.1M copper sulphate solution was introduced at the base of the column and pumped through at a rate of about 200 $cm^3$ per hour. On start up turbid effluent was obtained from the column and this was recycled, and soon after start up clear effluent was obtained.

The effects of varying the polymer/support ratio on the amount of copper removed from a dilute copper sulphate solution were investigated. Three ratios were used; 1:9, 1:5 and 1:2. The maximum uptake of copper per gramme of polymer was 0.18 g and in general the uptake of copper tended to be higher for the higher ratios eg, ratio of 1:9, 0.14 g of Cu removed for 1 g of polymer; ratio of 1:5, 0.11 g of Cu removed for 1 g of polymer; ratio of 1:2, 0.09 g of Cu removed for 1 g of polymer.

Effluents from the columns were sampled at intervals. Up to the breakthrough point, ie the point at which metal ions ceased to be absorbed and emerged from the column in the effluent, the concentration of copper in the effluent was less than 1 $\mu g\ cm^{-3}$. Many samples showed copper levels as low as 0.2 $\mu g\ cm^{-3}$, the level rising slightly as the column became exhausted. This corresponds to over 99.5% removal. The first few millilitres of column effluent had a slight sulphurous odour and a pale yellow colour, but this persisted for a short time only. Columns were operated on an intermittent basis ie some of the runs extended over two or three days, without deterioration in performance.

Figure 1 is a plot of ratio of copper concentration in effluent and feed solutions against cumulative volume ($cm^3$), showing breakthrough curves for the absorption of copper (II) ions as a function of the amount of Kieselguhr present in the column. Three columns were used - represented by lines A, B and C in Figure 1. Line A is the breakthrough curve for a polymer: Kieselguhr ratio of 1:9, line B is the curve for a ratio of 1:5 and line C is the curve for a ratio of 1:2.

EXAMPLE 3

A column was prepared as described in Example 2 and feed solutions of 0.005M aqueous copper (II) sulphate were pumped through at about 18°C. The polymer/support ratio was 1:9. The column was 155 mm in length and had an internal diameter of 25mm. The flow rate up to the breakthrough point was 170 $cm^{-3}$ $hour^{-1}$.

Table 1

| Copper concentrations ($\mu g\ cm^{-3}$) | | | |
|---|---|---|---|
| Feed | Effluent | Percentage copper removed from feed | Cumulative volume ($cm^3$) |
| 350 | 0[a] | ∿100 | 157 |
| 350 | 0[a] | ∿100 | 479 |
| 350 | 0[a] | ∿100 | 912 |
| 350 | 0[b] | ∿100 | 1200[b] |
| 350 | 27.6 | 92 | 1240 |
| 350 | 31.6 | 91 | 1297 |
| 350 | 131.2 | 63 | 1473 |
| 350 | 219.9 | 37 | 1704 |

a These concentrations were always less than 1μg/ml and generally below the useful limit of detection by atomic absorption spectroscopy (0.2μg/ml).

b The breakthrough point obtained by plotting the copper concentration in the effluent against the volume of effluent.

Example 4

Columns were prepared as described in Example 2 and feed solutions containing palladium ions were pumped through. The palladium was present in solution from the complex salt $Na_2PdCl_4$ at pH 2.0-3.0. In order to minimise the amount of palladium required, yet allow reasonable sized columns to be used, relatively large amounts of Kieselguhr were used.

| | Feed Conc$^{\underline{n}}$ (µg/cm$^3$ Pd) | Ratio P:S | g Pd removed/g Polymer | Flow Rate cm$^3$/hr |
|---|---|---|---|---|
| (1) | 57 | 1:80 | 0.60 | 310 |
| (2) | 60 | 1:80 | 0.38 | 410 |

In each case the column volume was constant at a length: diameter (L/D) ratio of 2.3. Typical pressure drops across the column averaged 5 psi, that is, little resistance to flow. The effluent from the columns was clear, colourless and the concentration of palladium was consistently less than 0.25 µg/ml prior to breakthrough. This corresponds to greater than 99.5% removal of metal ions.

Further results are summarised in Table 3.

Table 3

Feed and effluent concentrations for the extraction of palladium from aqueous $Na_2PdCl_4$ solutions[a]

Palladium concentrations (µg/ml)

| Feed | Effluent[b] | Percentage palladium removed from feed | Cumulative volume (ml) |
|---|---|---|---|
| 68 | 0.21 | 99.7 | 1047 |
| 68 | 0.20 | 99.7 | 2585 |
| 68 | 0.41 | 99.4 | 5982 |
| 68 | 0.89 | 98.7 | 7110 |
| 68 | 0.84 | 98.8 | 7368 |
| 68 | 0.91[c] | 98.7 | 7986[c] |

a Results obtained at 20°C using solutions adjusted to pH2-3 with dilute hydrochloric acid. The column contained 1g polymer and 75g of kieselguhr. The column had a length of 280mm, a diameter of 29mm and a volume of 185ml. The flow rate up to the breakthrough point was $500 ml.h^{-1}$.

b Determined using the carbon rod atomiser in the atomic absorption spectrometer.

c Breakthrough occurred subsequent to this point; hence palladium absorbed at breakthrough = 0.54g Pd/g polymer.

The effects of column variables ie L/D ratio and polymer: support ratios were investigated to optimise palladium removal and throughput volumes. Results are summarised below:

Table 4

| Column Volume ($cm^3$) | L/D | Flow Rate ($cm^3$/hr) | Pressure drop(psi) | Time to exhaut$^{\underline{n}}$ (hr) |
|---|---|---|---|---|
| (3) 75 | 6.2 | Initial 315→70 | Max 28 | 100 |
| (4) 225 | 2.3 | 410 | Max 5 | 25 |

Table 5

| Polymer:Support Ratio | g Pd removed | Feed conc$^{\underline{n}}$(ug/$cm^3$ Pd) |
|---|---|---|
| (3) 1g : 29g | 0.58 | 59 |
| (4) 1g : 80g | 0.38 | 60 |

In each column, palladium in the effluent ~ 0.25 µg/$cm^3$.

Further results are summarised in Table 6.

Table 6

| Column | A | B | C |
|---|---|---|---|
| Internal diameter (mm) | 25 | 50 | 25 |
| Length (mm) | 155 | 115 | 465 |
| Ratio of length: diameter | 6.2 | 2.3 | 18.6 |
| Volume (ml) | 75 | 225 | 228 |
| Ratio of polymer: kieselguhr | 1:30 | 1:80 | 1:80 |
| Flow rate ($ml.h^{-1}$) | 280 | 320 | 300 |
| Pressure drop (psi) | 6-8 | 2-3 | 23-30 |
| Velocity of flow in column ($cm.h^{-1}$) | 57.04 | 16.32 | 61.20 |
| Residence time (h)[a] | 0.26 | 0.70 | 0.76 |
| Palladium uptake (g Pd/g polymer) | 0.39 | 0.61 | 0.42 |

a. Residence time = volume of column/flow rate

When the internal diameter was increased but the bed depth kept similar (ie going from column A to column B) the uptake of palladium increased. This was probably largely due to the increased residence time of the solution on the column. When the internal diameter was increased but the bed depth decreased to keep a constant bed volume (ie comparing columns B and C) the uptake of palladium also increased. Increasing the internal diameter of the column leads to a reduction in both the pressure drop across the bed and the rate of flow of solution through the column.

Comparison of columns A and C show that for the same diameter, flow rate and velocity, increasing the length of the column has little effect. Comparison of columns A and C also shows that increasing the dispersion of the polymer from 1:30 to 1:80 does not greatly affect column performance.

Figure 2 is a plot of palladium uptake (g Pd/g polymer) against flow rate ($cm^3h^{-1}$) using column B. It is apparent that uptake decreases as the flow rate increases.

The performance of the polymer over a temperature range of 20°C to 50°C was investigated. There was a slight fall in absorption capacity from 0.543 g Pd at 20°C to 0.505 g Pd per gramme of polymer at high temperatures. For runs above ambient temperature water jacketted columns were used.

Example 5

The instability of the dithiocarbamates to oxidising mineral acids was used to recover copper from the initial absorbtion experiments. It was found that nitric acid over a range of concentrations destroyed the polymer and the copper was removed as a blue-green solution. The more concentrated the nitric acid the more vigorous the destruction process. Similar experiments were performed with the polymer/palladium complex using hydrochloric acid. It was possible to recover some of the palladium in this way but destruction of the polymer was not complete.

Example 6

Regeneration of exhausted columns was investigated using a solution of the disodium salt of ethylene diamine tetra acetic acid ($Na_2$EDTA). The $Na_2$EDTA solution was pumped through the exhausted column. For copper, the process was moderately successful it being possible to recover 35% to 55% of the absorbed copper.

Table 7

| Conc$^{\underline{n}}$ of $Na_2$EDTA | | Volume $Na_2$EDTA | % removal copper |
|---|---|---|---|
| (1) | 0.10M | 1000 mls | 55 |
| (2) | 0.25M | 400 mls | 35 |

The copper content of the polymer/copper complex was 0.075 g Cu/g polymer. Theoretical maximum Cu uptake by each EDTA sol$^{\underline{n}}$ is 6.36g.

Column packing was 5g polymer/copper complex: 25g Kieselghur. The capacity of each $Na_2$ EDTA solution for copper uptake was the same for each run. Column (1) was contacted by 16 bed volumes of $Na_2$ EDTA while column (2) 7 bed volumes. In each case the same flow rate through the column was used.

Example 7.

For the palladium columns a continuous regeneration using a sodium or potassium cyanide solution was investigated, since palladium can be readily recovered by electrolysis from cyanide solution. Batch regeneration experiments indicated that it was possible to recover over 90% of the absorbed palladium as the soluble $K_2[Pd(CN)_4]$ salt. Using the cyanide regeneration technique, with exhausted columns, it was possible to increase this to 98% palladium recovery using suitable regeneration conditions. By using a concentrated cyanide solution it was possible to use the same solution several times to achieve a concentration of palladium by a factor of at least 25:1 (ie volume of initial $K_2[Pd(CN)_4]$ solution: volume of final $K_2[Pd(CN)_4]$ solution = 25:1). The ability of the polymer to withstand repeated, insitu, regeneration was also investigated. A column was subjected to repeated contact with palladium solution followed by a cyanide stripping solution. This column was cycled five times, the initial level of palladium absorption falling from 0.39g to 0.29g per gram of polymer. The palladium recovered in the stripping solution was greater than 95% of that absorbed in the column in the prior extractive cycle.

Figure 3 is a plot of palladium uptake (g Pd/g polymer) against number of cycles, showing the fall-off in palladium absorption on recycling a column which was 150 mm in length with a 25 mm internal diameter, packed with a 1:3 ratio of polymer to Kieselguhr. The column was alternately loaded with palladium and eluted with 2M aqueous sodium cyanide. The fall-off in absorption was about 30% over 5 cycles.

Prior to pumping the cyanide solution through the columns water was flushed through until the pH of the flush water was between 5.0 and 7.0. This was done so as to avoid liberation of hydrogen cyanide which would have occurred at pH 2-3.

CLAIMS

1 A method of removing metal ions from a turbid liquid including pumping the liquid through a column which includes a non-cross-linked, insoluble polymer capable of scavenging metal ions, dispersed in an inert support material.

2 A method as claimed in claim 1 and wherein the turbid liquid to be pumped through the column, enters the column at the base and is recovered at the top.

3 A method as claimed in claim 1 or claim 2 and wherein the turbid liquid is pumped through the column at a rate of between 200 $cm^3$ per hour and about 300 $cm^3$ per hour.

4 A method as claimed in any one preceeding claim and wherein the non-cross-linked insoluble polymer is polyethyleneimine dithio carbamate and is in the form of a fine powder.

5 A method as claimed in claim 4 and wherein the polyethyleneimine dithio carbamate is prepared by adding a solution of polyethyleneimine in ethanol to a mixture of carbon disulphide and ethanol.

6 A method as claimed in any one of claims 1, 2 or 3 and wherein the inert support material is silica, fly ash or a diatomaceous earth.

7 A method as claimed in claim 6 and wherein the inert support material is a diatomaceous earth.

8 A method as claimed in claim 6 or claim 7 and wherein the inert support material has a particle size not more than a factor of 5 greater than the average size of the polymer particles and not more than a factor of 100 less than the average size of the polymer particles.

9 A method as claimed in any one preceeding claim and wherein the polymer is dispersed in the inert support material by mixing

the polymer and the inert support material and slurrying the mixture.

10 A method as claimed in claim 9 and wherein the ratio of polymer to inert support material is not less than 1:9.

11 A method as claimed in claim 1 and wherein the length to diameter ratio of the column is about 6.

12 A method as claimed in claim 1 and which includes removing absorbed metal ions from a column.

13 A method as claimed in claim 12 and wherein absorbed metal ions are removed by treating polymer/metal complex particles with an oxidising mineral acid.

14 A method as claimed in claim 13 and wherein the oxidising mineral acid is nitric acid or hydrochloric acid.

15 A method as claimed in claim 1 or claim 12 and wherein metal ions absorbed in the column are removed by contacting the polymer in the column with a regenerating liquid thereby regenerating the column.

16 A method as claimed in claim 15 and wherein the turbid liquid and regenerating liquid are alternately pumped through the column.

17 A method as claimed in claim 16 and wherein water is pumped through prior to pumping a regenerating liquid through the column.

18 A method as claimed in claim 17 and wherein water is pumped through until the pH of the water emerging from the column is between 5.0 and 7.0.

19 A method as claimed in any one of claims 15 to 18 and wherein the regenerating liquid is capable of reacting with metal ions to produce a complex salt.

20 A method as claimed in claim 19 and wherein metal is recovered from the complex salt.

21 A method as claimed in any one of claims 15 to 19 and wherein the regenerating liquid is a solution of disodium salt of ethylenediaminetetra acetic acid.

22 A method as claimed in claim 21 and wherein the solution has a concentration of between about 0.1 M and 0.25 M.

23 A method as claimed in any one of claims 15 to 19 and wherein the regenerating liquid is a solution of potassium cyanide or a solution of sodium cyanide.

24 A method as claimed in claim 23 and wherein the cyanide solution has a concentration of about 2 M.

25 A method as claimed in any one of claims 1 to 11, substantially as hereinbefore described and with reference to Examples 1, 2 or 3.

26 A method as claimed in anyone of claims 12 to 24, substantially as hereinbefore described and with reference to Examples 4, 5 or 6.

27 Apparatus for removing metal ions from turbid liquids by the method claimed in any one preceding claim including a column which includes a non-cross-linked, insoluble polymer capable of scavenging metal ions, dispersed in an inert support material.

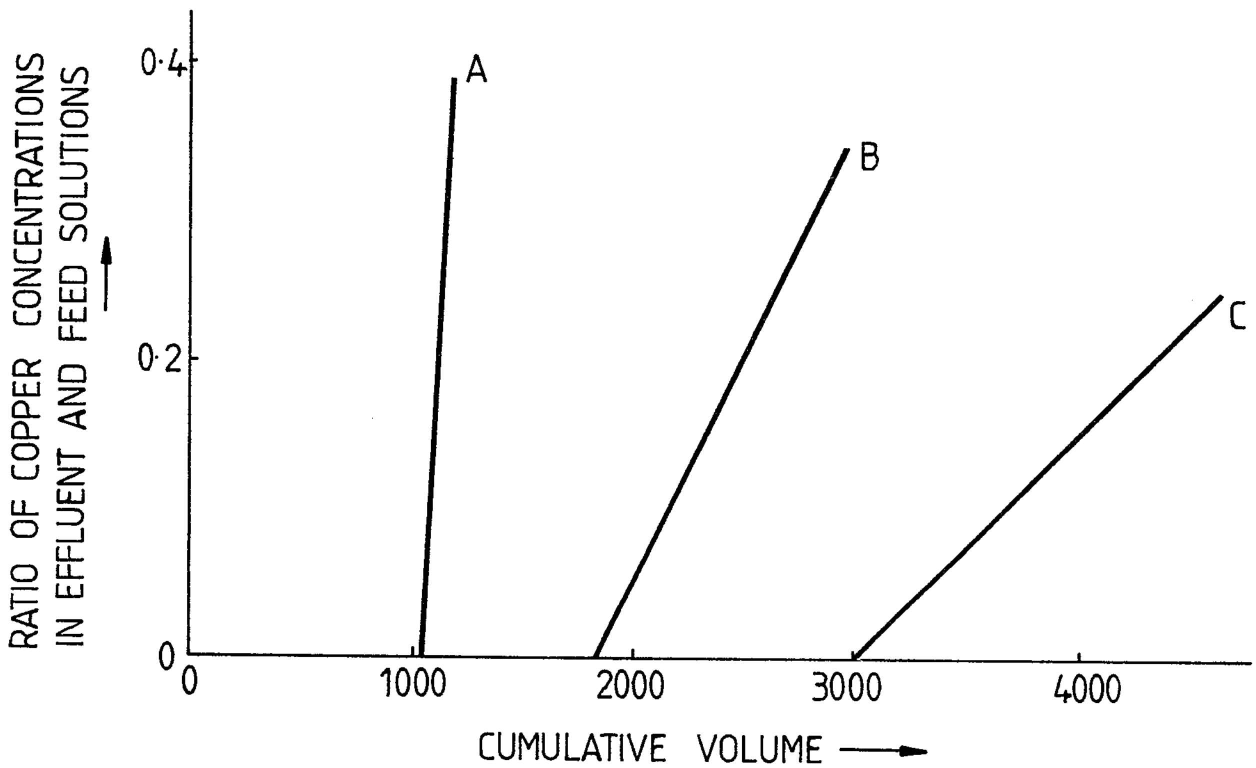
RATIO OF COPPER CONCENTRATIONS IN EFFLUENT AND FEED SOLUTIONS
0·4
0·2
0
A
B
C
0
1000
2000
3000
4000
CUMULATIVE VOLUME

*Fig. 1*

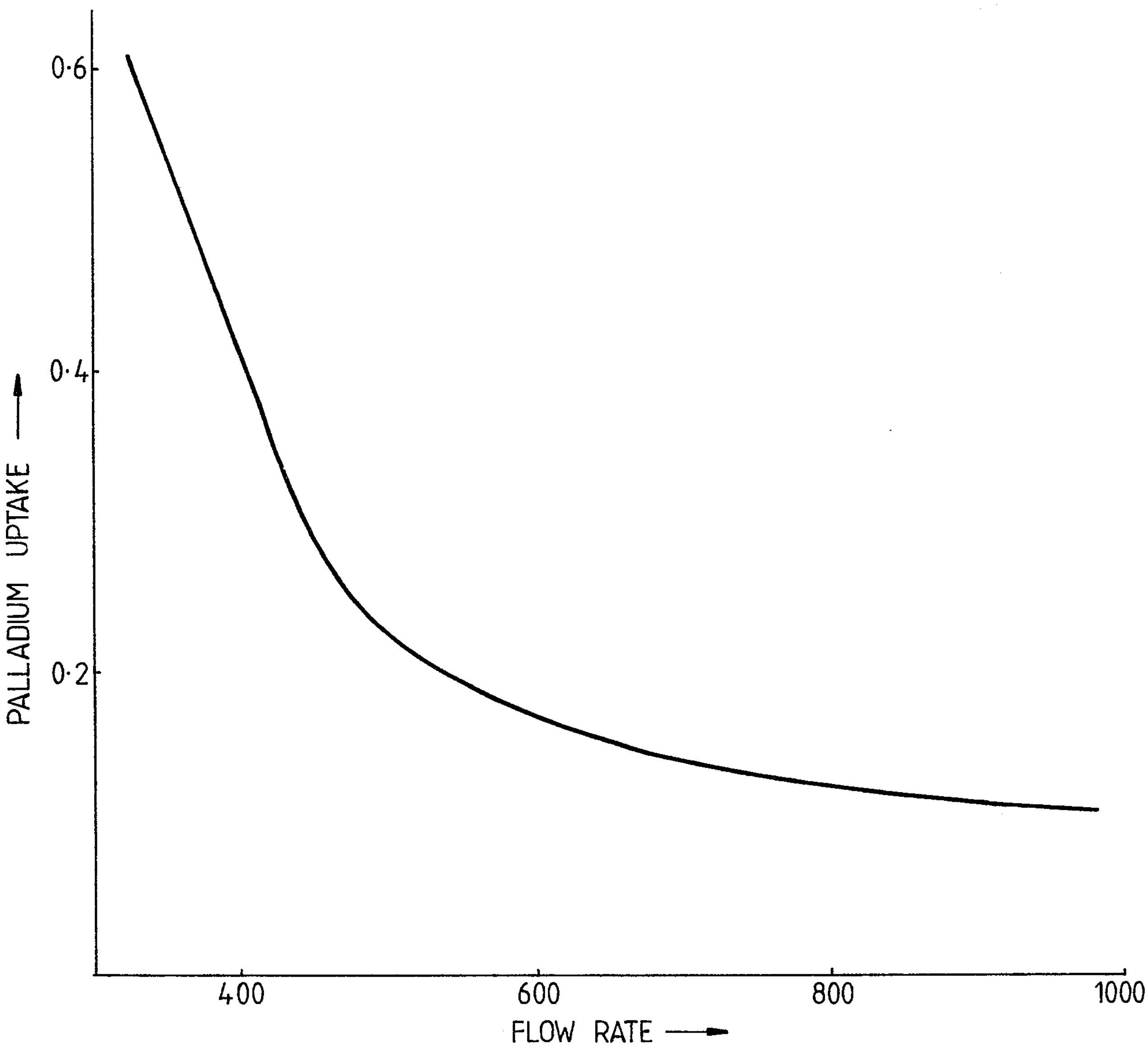


Fig.2

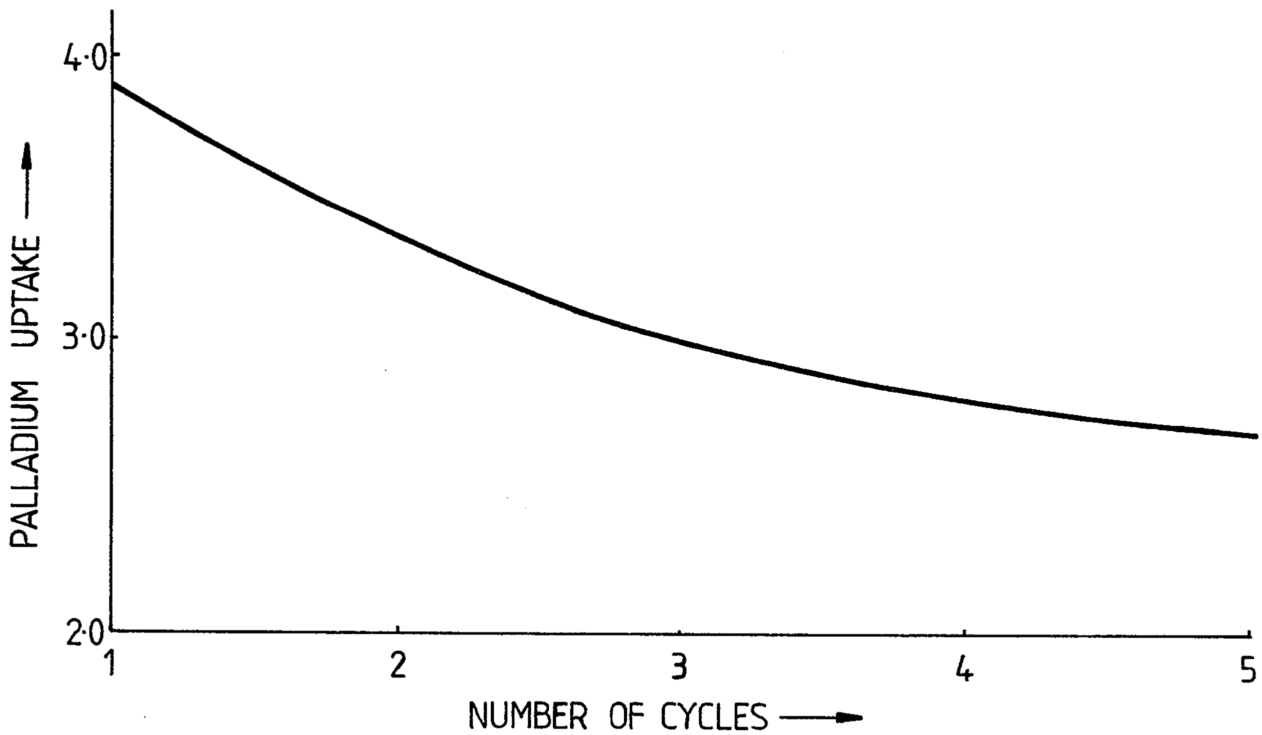


Fig.3

0090551

European Patent Office

# EUROPEAN SEARCH REPORT

Application number

EP 83301473.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB - A - 1 395 463 (NIPPON SODA COMPANY LIMITED)<br>* Page 1, lines 42-84; page 2, lines 44-49; page 3, lines 54-57, 107-119; page 3, line 127 - page 4, line 124; claims *<br>---- | 1-3,6-8,12, 15,27 | C 02 F 1/28<br>C 02 F 1/58<br>C 02 F 1/62<br>C 08 G 73/04 |

| TECHNICAL FIELDS SEARCHED (Int. Cl. 3) |
|---|
| C 02 F<br>C 08 G 73/00 |

The present search report has been drawn up for all claims

| Place of search | Date of completion of the search | Examiner |
|---|---|---|
| VIENNA | 08-06-1983 | WILFLINGER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82